# EUROPEAN PATENT APPLICATION

(11) **EP 3 760 660 A1**
(43) Date of publication of application: **06.01.2021**
(21) Application number: 19757745.5
(22) Date of filing: 22.02.2019
(51) Int. Cl.: C08G 59/20, C08G 77/14

(54) **EPOXY GROUP-CONTAINING POLYORGANOSILOXANE, CURABLE RESIN COMPOSITION CONTAINING EPOXY GROUP-CONTAINING POLYORGANOSILOXANE, AND CURED PRODUCT OF SAME**

(30) Priority: 26.02.2018 JP 2018031539
(71) Applicant: Mitsubishi Chemical Corporation, Chiyoda-ku Tokyo 100-8251 (JP)
(72) Inventor: TOBE, Akifumi, Tokyo 100-8251 (JP); YAMAZAKI, Mutsumi, Tokyo 100-8251 (JP); ITO, Akihiro, Tokyo 100-8251 (JP); WATANABE, Takumi, Tokyo 100-8251 (JP); TERADA, Noriaki, Tokyo 100-8251 (JP)
(74) Representative: Hoffmann Eitle
(86) International application number: PCT/JP2019/006906
(87) International publication number: WO 2019/163970

(57) **Abstract**

An object of the present invention is to provide an epoxy group-containing polyorganosiloxane, a curable resin composition and a cured product which are excellent in curability, surface nature of a coating film, adhesiveness, and impact resistance. The epoxy group-containing polyorganosiloxane of the present invention contains an M unit (R¹R²R³SiO_{1/2}), a D unit (R⁴R⁵O_{2/2}), and a Q unit (SiO_{4/2}), wherein a content of a T unit (R⁶SiO_{3/2}) with respect to total silicon is 80 mol% or less. The curable resin composition of the present invention contains the epoxy group-containing polyorganosiloxane (A) and a curing agent (B).

## Description

### Technical Field

The present invention relates to an epoxy group-containing polyorganosiloxane having excellent curability. In addition, the present invention relates to a curable resin composition obtained by using the epoxy group-containing polyorganosiloxane and a cured product thereof.

### Background Art

Epoxy resins are known to have high molding accuracy because of low shrinkage and little accumulation of internal stress during curing, and are suitably used as photocationically cured resins. Epoxy resins as photocationically curable resins have a problem of improving curability. Non-Patent Literature 1 describes an alicyclic epoxy resin having a siloxane skeleton.

### Background Art Literature

### Non Patent Literature

Non-Patent Literature 1: Journal of Polymer Science: Part A: Polymer Chemistry, Vol.28, 479-503(1990)

### Summary of Invention

### Technical Problem

However, the alicyclic epoxy resin described in Non-Patent Literature 1 is insufficient in surface nature of a cured coating film, adhesiveness, and impact resistance.

The present invention has been made in view of the above problem in the related art.

Namely, an object of the present invention is to provide an epoxy group-containing polyorganosiloxane, a curable resin composition and a cured product which are excellent in curability, surface nature of a coating film, adhesiveness, and impact resistance.

### Solution to Problem

The inventors of the present invention have made intensive studies in order to solve the above problem. As a result, it has been found that an epoxy group-containing polyorganosiloxane containing an M unit (R¹R²R³SiO_{1/2}), a D unit (R⁴R⁵O_{2/2}), and a Q unit (SiO_{4/2}), and containing a T unit (R⁶SiO_{3/2}) in a content of 80 mol% or less with respect to total silicon can solve the above problem. Thus, the present invention has been accomplished.

Namely, the gist of the present invention is in the following [1] to [14].
[1] An epoxy group-containing polyorganosiloxane, containing: an M unit (R¹R²R³SiO_{1/2}), a D unit (R⁴R⁵O_{2/2}), and a Q unit (SiO_{4/2}), wherein a content of a T unit (R⁶SiO_{3/2}) with respect to total silicon is 80 mol% or less.
[2] The epoxy group-containing polyorganosiloxane according to [1], which has a weight loss rate of 5 % by weight or less when the polyorganosiloxane is heated at 110°C for 2 hours under a reduced pressure of 0.15 torr.
[3] The epoxy group-containing polyorganosiloxane according to [1] or [2], wherein a content of the M unit (R¹R²R³SiO_{1/2}) with respect to total silicon is 10 mol% or more and 75 mol% or less.
[4] The epoxy group-containing polyorganosiloxane according to any one of [1] to [3], wherein a content of the Q unit (SiO_{4/2}) with respect to total silicon is 3 mol% or more.
[5] The epoxy group-containing polyorganosiloxane according to any one of [1] to [4], which has a maximum absorption wave number of Si-O stretching vibration in a region having a wave number of from 1030 cm⁻¹ to 1060 cm⁻¹ in infrared absorption spectrum analysis.
[6] The epoxy group-containing polyorganosiloxane according to any one of [1] to [5], wherein a content of the D unit (R⁴R⁵O_{2/2}) with respect to total silicon is 10 mol% or less.
[7] The epoxy group-containing polyorganosiloxane according to any one of [1] to [6], which has an epoxy equivalent of from 100 g/equivalent to 5000 g/equivalent.
[8] A curable resin composition containing: the epoxy group-containing polyorganosiloxane (A) according to any one of [1] to [7]; and a curing agent (B).
[9] The curable resin composition according to [8], wherein the curing agent (B) is a cationic polymerization initiator.
[10] The curable resin composition according to [8] or [9], further containing an epoxy compound (C) which is different from the epoxy group-containing polyorganosiloxane (A).
[11] The curable resin composition according to [10], wherein an aliphatic epoxy compound is contained as the epoxy compound (C).
[12] The curable resin composition according to [11], wherein hydrogenated bisphenol-based diglycidyl ethers are contained as the epoxy compound (C).
[13] The curable resin composition according to any one of [10] to [12], wherein a percentage of the epoxy group-containing polyorganosiloxane (A) occupying a total amount of the epoxy group-containing polyorganosiloxane (A) and the epoxy compound (C) is 0.1 % by weight or more and 80 % by weight or less.
[14] A cured product obtained by curing the curable resin composition according to any one of [8] to [13].

### Effects of Invention

According to the present invention, an epoxy group-containing polyorganosiloxane, a curable resin composition and a cured product which are excellent in curability, surface nature of a coating film, adhesiveness, and impact resistance can be provided.

Because of having the above features, the epoxy group-containing polyorganosiloxane, the curable resin composition and the cured product of the present invention can be applied and developed in the fields of electric and electronic materials, fiber reinforced plastic (FRP), adhesives and paints, dental materials, inks represented by 2D/3D printers, or the like. Especially, from the viewpoint that the curing shrinkage of the epoxy resin is small and the internal stress generated during curing is small, and that the cured product containing the epoxy group-containing polyorganosiloxane of the present invention has excellent surface nature of a coating film, the epoxy group-containing polyorganosiloxane, the curable resin composition and the cured product of the present invention can be suitably used for a product having a large thickness, such as a thick FRP, a dental material, and a molded product produced by a 3D printer.

### Description of Embodiments

Hereinafter, although embodiments of the present invention will be described in detail, the present invention is not limited to the following descriptions, and can be arbitrarily modified and implemented without departing from the gist of the present invention. In this description, when "to" is used to express a range in which values before and after the value are sandwiched by numerical values or physical property values, it means a range including the values before and after the value.

### [Epoxy Group-containing Polyorganosiloxane]

The epoxy group-containing polyorganosiloxane is a polymer having a siloxane bond as a main chain and containing an epoxy group, and is represented, for example, by the following composition formula (1).

(R¹R²R³SiO_{1/2})ₐ(R⁴R⁵SiO_{2/2})_{b}(R⁶SiO_{3/2})O(SiO_{4/2})_{d}(O_{1/2}R⁷)ₑ(O_{1/2}H)_{f} ... (1)

(In formula (1), R¹ to R⁶ each independently represent a hydrogen atom, or a monovalent organic group which has 1 to 20 carbon atoms and may have a substituent, or a group represented by the following formula (2), or a group represented by the following formula (3). At least one of R¹ to R⁶ is a group represented by the following formula (2) or the following formula (3). a + b + c + d = 1, 0 ≤ e + f < 4. R⁷ is a monovalent organic group having 1 to 7 carbon atoms.)

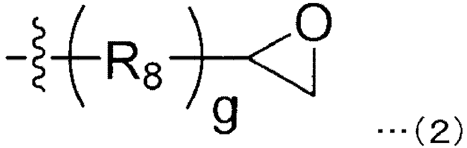

(In formula (2), R⁸ is a divalent organic group which has 1 to 20 carbon atoms and may have a substituent, and g = 0 or 1.)

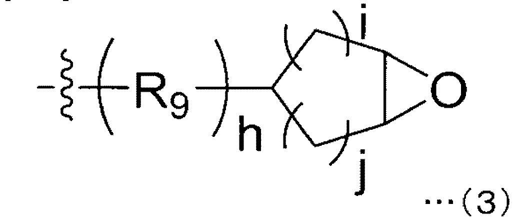

(In formula (3), R⁹ is a divalent organic group which has 1 to 20 carbon atoms and may have a substituent, and h = 0 or 1, 0 ≤ i ≤ 8, 0 ≤ j ≤ 8.)

The epoxy group-containing polyorganosiloxane of the present invention is an epoxy group-containing polyorganosiloxane containing an M unit (R¹R²R³SiO_{1/2}), a D unit (R⁴R⁵O_{2/2}), and a Q unit (SiO_{4/2}), in which a content of a T unit (R⁶SiO_{3/2}) with respect to total silicon is 80 mol% or less.

It is preferable that the epoxy group-containing polyorganosiloxane of the present invention is an epoxy group-containing polyorganosiloxane in which the content of the M unit is 10 mol% or more and 75 mol% or less with respect to total silicon, the content of the Q unit (SiO_{4/2}) is 3 mol% or more with respect to total silicon, and the content of the D unit (R⁴R⁵O_{2/2}) is 10 mol% or less with respect to total silicon.

The content of each unit of the epoxy group-containing polyorganosiloxane of the present invention can be analyzed by ²⁹Si-NMR measurement as described in the Examples described below.

### <M Unit>

In the epoxy group-containing polyorganosiloxane of the present invention, it is essential to contain the M unit (R¹R²R³SiO_{1/2}). In the above formula (1), a means a percentage of the M unit (R¹R²R³SiO_{1/2}) with respect to total silicon, and is preferably 0.1 or more (namely, a content of the M unit (R¹R²R³SiO_{1/2}) with respect to total silicon is 10 mol% or more, and the same applies to mol% in parentheses below), more preferably 0.2 or more (20 mol% or more), and still more preferably 0.5 or more (50 mol% or more). When a is 0.1 or more, namely, the content of the M unit is larger than or equal to an appropriate lower limit value, it is easy to control a molecular weight of the epoxy group-containing polyorganosiloxane. In addition, a is less than 1 (less than 100 mol%), preferably 0.9 or less (90 mol% or less), more preferably 0.75 or less (75 mol% or less), and still more preferably 0.7 or less (70 mol% or less). By adjusting within the above range, namely, the content of the M unit is adjusted smaller than or equal to an appropriate upper limit value, it is easy to keep the molecular weight within an appropriate range that is not too small, and it is possible to prevent a flash point from lowering by preventing an increase in low boiling point components.

### <T Unit>

In the epoxy group-containing polyorganosiloxane of the present invention, c in the above formula (1), which means a percentage of the T unit (R⁶SiO_{3/2}), is 0.8 or less (namely, a content of the T unit (R⁶SiO_{3/2}) with respect to total silicon is 80 mol% or less, and the same applies to mol% in parentheses below), and preferably 0.65 or less (65 mol% or less). On the other hand, c indicating the percentage of the T unit (R⁶SiO_{3/2}) is generally 0 or more. In the formula (1), by adjusting c within the above range, appropriate rigidity can be given to a cured product in a case of curing the epoxy group-containing polyorganosiloxane. It is particularly preferable that c is a value of 0.8 or less, since it is easy to keep a viscosity of the epoxy group-containing polyorganosiloxane in a manageable range and a brittleness of the cured product is improved. In a case where the Q unit described below is contained in an appropriate range, even when the T unit is not in the above preferred range, appropriate rigidity can be provided in the case of curing the epoxy group-containing polyorganosiloxane.

### <Q Unit>

The epoxy group-containing polyorganosiloxane of the present invention contains the Q unit represented by (SiO_{4/2}), namely, in the formula (1), d is larger than 0, more preferably 0.03 or more (namely, a content of the Q unit (SiO_{4/2}) with respect to total silicon is 3 mol% or more, and the same applies to mol% in parentheses below), and particularly preferably 0.2 or more (20 mol% or more). On the other hand, d indicating a percentage of the Q unit (SiO_{4/2}) is preferably 0.7 or less (70 mol% or less), and more preferably 0.5 or less (50 mol% or less). By containing the Q unit, a heat resistance is improved, and by adjusting d within the above range in the formula (1), the viscosity of the epoxy group-containing polyorganosiloxane can be prevented from becoming too high, and appropriate rigidity can be given to the cured product in a case of curing the epoxy group-containing polyorganosiloxane. When d is larger than 0.7 in formula (1), by being mixed with other epoxy compound or acrylic compound and subjecting to curing, a toughness, such as breaking strength, of the cured product can be improved.

In a case where the T unit described above is contained in an appropriate range, even when the Q unit is not in the above preferred range, appropriate rigidity can be provided in a case of curing the epoxy group-containing polyorganosiloxane.

### <D Unit>

The epoxy group-containing polyorganosiloxane of the present invention contains the D unit represented by (R⁴R⁵O_{2/2}), namely, in the formula (1), b is larger than 0, and more preferably 0.01 or more (namely, a content of the D unit (R⁴R⁵O_{2/2}) with respect to total silicon is 1 mol% or more, and the same applies to mol% in parentheses below). Although an upper limit of b is not particularly limited, 0.3 or less (30 mol% or less) is preferable, and 0.1 or less (10 mol% or less) is more preferable. When the D unit (R⁴R⁵O_{2/2}) is contained within the above range, it is easy to keep the elastic modulus of the cured product high. The content of the D unit (R⁴R⁵O_{2/2}) is preferably larger than or equal to an appropriate lower limit value, since the epoxy group-containing polyorganosiloxane is less likely to form a cage structure, the viscosity can be prevented from becoming too high, and the cured product of the epoxy group-containing organosiloxane can be prevented from becoming too hard.

### <Terminal Group>

Although amounts of (O_{1/2}R⁷) and (O_{1/2}H) in the above formula (1), which represent the terminal groups of the epoxy group-containing polyorganosiloxane of the present invention, are not particularly limited, the amounts are generally, 0 ≤ e + f < 4, preferably 0 ≤ e + f < 2, more preferably 0 ≤ e + f < 1, and still more preferably 0 ≤ e + f < 0.5. Since these terminal groups generally have reactivity, it is preferable that the value of e + f is small since storage stability tends to be good. In addition, although R⁷ of (O_{1/2}R⁷) representing a terminal group other than a hydroxy group is not particularly limited, and R⁷ is preferably a hydrocarbon group having 1 to 7 carbon atoms, and more preferably a methyl group, an ethyl group or an isopropyl group. When R⁷ is one of those groups having relatively few carbon atoms, an introduction reaction of the epoxy group and the curing reaction of the generated the epoxy group-containing polyorganosiloxane tend to be hardly sterically inhibited.

### <Type of Epoxy Group>

A type of the epoxy group contained in the epoxy group-containing polyorganosiloxane of the present invention is not particularly limited, and is, for example, classified into one containing an ethylene oxide group at the terminal represented by a glycidyl group, and one containing no ethylene oxide but containing an alicyclic epoxy group, such as a cyclohexene oxide group, at the terminal, and can be used properly depending on the desired performance.

Further, two or more different types of epoxy groups may be used in combination. In this case, in view of the characteristics of each epoxy group described below, it is preferable to control the ratio in accordance with the desired characteristics.

For example, for the purpose of improving the adhesiveness to a substrate, the epoxy group-containing polyorganosiloxane of the present invention preferably has an ethylene oxide group at the terminal. More specifically, the epoxy group-containing polyorganosiloxane of the present invention preferably contains a group represented by the following formula (2), more preferably contains a group represented by the following formula (4) or the following formula (5), and still more preferably contains a group represented by the following formula (4). Examples of the divalent organic group represented by R⁸ which has 1 to 20 carbon atoms and may have a substituent in formula (2) include a divalent (namely, one hydrogen atom is removed) organic group corresponding to groups exemplified as the monovalent organic group represented by R¹ to R⁶ which has 1 to 20 carbon atoms and may have a substituent.

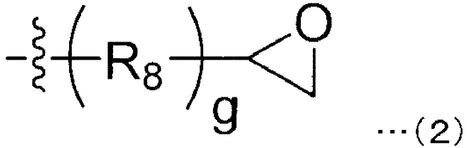

(In the formula (2), R⁸ is a divalent organic group which has 1 to 20 carbon atoms and may have a substituent, and g = 0 or 1.)

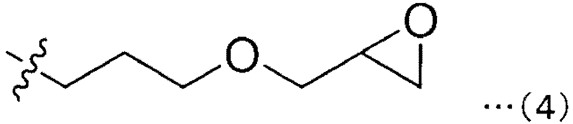

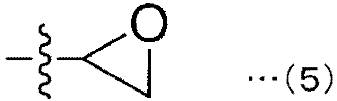

For another example, for the purpose of enhancing the curability, the epoxy group-containing polyorganosiloxane of the present invention preferably contains an optionally substituted alicyclic epoxy group having 3 to 18 carbon atoms. More specifically, the epoxy group-containing polyorganosiloxane of the present invention preferably contains a group represented by the following formula (3), more preferably contains a group represented by the following formula (6), the following formula (7) or the following formula (8), and still more preferably contains a group represented by the following formula (6). Examples of the divalent organic group represented by R⁹ which has 1 to 20 carbon atoms and may have a substituent in formula (3) include a divalent (namely, one hydrogen atom is removed) organic group corresponding to groups exemplified as the monovalent organic group represented by R¹ to R⁶ which has 1 to 20 carbon atoms and may have a substituent.

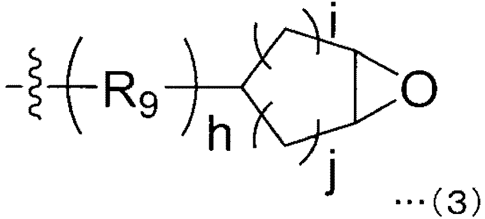

(In formula (3), R⁹ is a divalent organic group which has 1 to 20 carbon atoms and may have a substituent, and h = 0 or 1, 0 ≤ i ≤ 8, 0 ≤ j ≤ 8.)

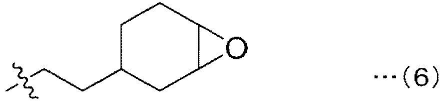

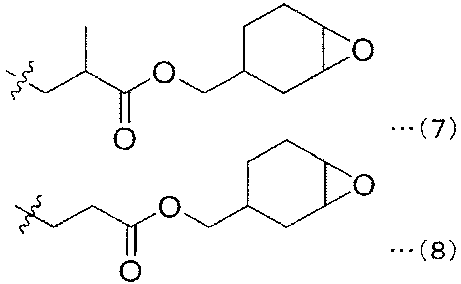

### <Group which does not contain an Epoxy Group among R¹ to R⁶>

Among R¹ to R⁶ in the above formula (1), a structure of a group which does not contain an epoxy group is not particularly limited. R¹ to R⁶ are each independently a hydrogen atom or a monovalent organic group which has 1 to 20 carbon atoms and may have a substituent. Specific examples thereof include a hydrogen atom, a linear alkyl group having 1 to 20 carbon atoms, a branched alkyl group having 1 to 20 carbon atoms, an alkyl group having a cyclic structure and having 1 to 20 carbon atoms, an aromatic hydrocarbon group having 1 to 20 carbon atoms, and a heterocyclic group having 1 to 20 carbon atoms. Among these, more preferred are a hydrogen atom, alkyl groups such as a methyl group, an ethyl group, a propyl group, an isopropyl group, a butyl group, a sec-butyl group, a tert-butyl group, an octyl group and a cyclohexyl group, aromatic functional groups such as a phenyl group, a naphthyl group, a carbazole group, and a phenethyl group, and ether groups such as a furanyl group and a polyethylene glycol group; and still more preferred are a hydrogen atom, a methyl group, and a phenyl group.

Examples of the M unit (R¹R²R³SiO_{1/2}) in the above formula (1) include a trimethylsiloxy group (Me₃SiO_{1/2}), a dimethylsiloxy group (Me₂HSiO_{1/2}), a methylsiloxy group (MeH₂SiO_{1/2}), a trihydrosiloxy group (H₃SiO_{1/2}), a dimethylvinylsiloxy group (Me₂ViSiO_{1/2}), a dimethyl methacryloxypropyl group (Me₂(MaOPr)SiO_{1/2}), a triphenylsiloxy group (Ph₃SiO_{1/2}), a diphenylsiloxy group (Ph₂HSiO_{1/2}), a phenylsiloxy group (PhH₂SiO_{1/2}), a methylphenylsiloxy group (MePhHSiO_{1/2}), a dimethylphenylsiloxy group (Me₂PhSiO_{1/2}), and a methyldiphenylsiloxy group (MePh₂SiO_{1/2}). The epoxy group-containing polyorganosiloxane of the present invention may contain only one kind of these M units, two or more kinds thereof, or may contain them together with an epoxy group-containing M unit. Namely, the epoxy group-containing polyorganosiloxane of the present invention may contain, for example, a trimethylsiloxy group and a triphenylsiloxy group, or may contain a trimethylsiloxy group and a glycidyloxypropyldimethylsiloxy group.

In addition, only the epoxy group-containing M unit may be used as needed. Namely, the epoxy group-containing polyorganosiloxane of the present invention contains, for example, a glycidyloxypropyldimethylsiloxy group as the M unit, and may not contain other M unit species.

As for the D unit (R⁴R⁵O_{2/2}) in the above formula (1), R⁴ and R⁵ may be the same functional group or a combination of different functional groups as in the above M unit. In addition, the epoxy group-containing polyorganosiloxane of the present invention may contain only one type of D unit, or may contain two or more types of D units.

Kinds of the T unit (R¹SiO_{3/2}) in the above formula (1) may be one, or may be two or more kinds as in the above M unit. In addition, only the epoxy group-containing T unit may be used as the kind of the T unit as needed.

However, R¹ to R⁶ in the above formula (1) contain a group containing at least one or more kinds of epoxy groups.

### <Maximum Absorption Wave Number of Si-O Stretching Vibration>

The epoxy group-containing polyorganosiloxane of the present invention is preferably an epoxy group-containing polyorganosiloxane which contains the Q unit represented by (SiO_{4/2}) and has a maximum absorption wave number of Si-O stretching vibration in a region having a wave number of from 1030 cm⁻¹ to 1060 cm⁻¹ in infrared absorption spectrum analysis.

The maximum absorption wave number of the Si-O stretching vibration is preferably included in the above wave number region in the infrared absorption spectrum analysis, since an extremely hard structure such as cage silsesquioxane can be avoided, and an epoxy group-containing polyorganosiloxane which is liquid and easy to handle can be obtained. The maximum absorption wave number means the wave number which gives the maximum absorbance in a specific wave number region, and in the present embodiment, a wave number which gives the maximum absorbance in a region of a wave number of from 1000 cm⁻¹ to 1200 cm⁻¹ is defined as the maximum absorption wave number.

The maximum absorption wave number in the infrared absorption spectrum analysis can be measured by an ATR method (attenuated total reflection method) by using a Fourier transform infrared spectroscopy.

In addition, the epoxy group-containing polyorganosiloxane of the present invention preferably does not have an absorption peak of the Si-O stretching vibration in a region having a wave number of from 1070 cm⁻¹ to 1150 cm⁻¹ in the infrared absorption spectrum analysis. The absorption peak of the Si-O stretching vibration is preferably not included in the above wave number region, since an extremely hard structure such as cage silsesquioxane can be avoided, and an epoxy group-containing polyorganosiloxane which is liquid and easy to handle can be obtained.

A characteristic absorption band derived from organic molecules other than Si-O may be present in the region having a wave number of from 1070 cm⁻¹ to 1150 cm⁻¹. Examples of the characteristic absorption band derived from organic molecules include characteristic absorption bands derived from C-O of a hydroxy group, C-O-C of an ester, C-O-C of an acid anhydride, C-O-C of an ether, C-N of an amine, C-S of sulfonic acid or a sulfoxide, C-F of a fluorine compound, P=O or P-O of a phosphorus compound, and an inorganic salt SO₄²⁻ or ClO₄⁻. It should be noted not to confuse attribution of these with the Si-O stretching vibration.

### <Epoxy Equivalent>

The epoxy equivalent of the epoxy group-containing polyorganosiloxane of the present invention is preferably 100 g/equivalent or more, more preferably 150 g/equivalent or more, and still more preferably 200 g/equivalent or more. When the epoxy equivalent is larger than or equal to the lower limit described above, the surface nature of a cured coating film can be improved and the crosslinking density can be increased, so that the coating film strength and heat resistance can be increased, and particularly, the adhesion of the coating film can be improved.

In addition, the epoxy equivalent of the epoxy group-containing polyorganosiloxane of the present invention is preferably 5000 g/equivalent or less, more preferably 2000 g/equivalent or less, and still more preferably 1000 g/equivalent or less. The epoxy equivalent is preferably smaller than or equal to the upper limit described above, since good curability and adhesiveness can be maintained and the surface nature of the coating film can be improved because of low shrinkage during curing, and the impact resistance can be improved because of an appropriate crosslinking density.

The "epoxy equivalent" as used in the present invention is defined as "a mass of the epoxy resin containing one equivalent of epoxy group (in the present invention, the epoxy group-containing polyorganosiloxane)" and can be measured in conformity with JIS K 7236.

### <Weight Average Molecular Weight (Mw)>

A weight average molecular weight (Mw) of the epoxy group-containing polyorganosiloxane of the present invention is not particularly limited, and is preferably 300 or more, more preferably 500 or more, and particularly preferably 700 or more from the viewpoint of improving the surface nature of the cured coating film. In addition, the weight average molecular weight (Mw) of the epoxy group-containing polyorganosiloxane of the present invention is preferably 10,000 or less, more preferably 7,500 or less, and particularly preferably 5,000 or less from the viewpoint of the handleability.

### <Number Average Molecular Weight (Mn)>

The number average molecular weight (Mn) of the epoxy group-containing polyorganosiloxane of the present invention is not particularly limited, and is preferably 150 or more, more preferably 250 or more, and particularly preferably 600 or more from the viewpoint of the surface nature of the cured coating film. In addition, the number average molecular weight (Mn) of the epoxy group-containing polyorganosiloxane of the present invention is preferably 9,000 or less, more preferably 6,500 or less, and particularly preferably 4,000 or less from the viewpoint of the handleability.

The weight average molecular weight and the number average molecular weight of the epoxy group-containing polyorganosiloxane can be measured by gel permeation chromatography (GPC). An example of the more detailed method will be described in Examples described later.

### <Amount of Low Boiling Point Component>

The amount of the low boiling point component contained in the epoxy group-containing polyorganosiloxane of the present invention is not particularly limited. When the amount of the low boiling point component is small, the flash point is high, so that the safety during transportation and storage can be easily maintained, and the reduction in thickness during the heat curing or during the use of the cured product and thus the embrittlement can be prevented. The amount of the low boiling point component contained in the epoxy group-containing polyorganosiloxane of the present invention can be expressed, for example, as a weight loss rate after being heated at 110°C for 2 hours under a reduced pressure of 0.15 torr. The weight loss rate is preferably 10 % by weight or less, more preferably 8 % by weight or less, and still more preferably 5 % by weight or less.

Specifically, the amount of the low boiling point component can be measured by the following procedure. The ¹H-NMR is measured, and the weight of the component other than the polyorganosiloxane, such as an organic solvent, is calculated. A 16 × 3.5 mm oval PTFE rotor is placed in a 1 L eggplant-shaped flask and the weight thereof is measured. Thereafter, the polyorganosiloxane is charged into the eggplant-shaped flask and the weight is measured. At this time, the amount of the polyorganosiloxane charged is preferably 200 g. The eggplant-shaped flask is heated in an oil bath, the rotor is rotated by a magnetic stirrer, the liquid is stirred until the liquid surface flows, and the pressure is reduced by an oil-type vacuum pump. The pressure at this time is preferably from 0.2 torr to 0.1 torr, and it is preferable to reduce the pressure to be 0.15 torr, as confirmed by a manometer. After 2 hours, the eggplant-shaped flask is cooled to room temperature, and returned to atmospheric pressure with nitrogen gas. The oil adhered to the eggplant-shaped flask is thoroughly wiped off and the weight of the eggplant-shaped flask in a state where the polyorganosiloxane is therein is measured. The weight of the eggplant-shaped flask and the rotor previously measured is subtracted, and the weight volatilized by the operation is calculated. The ¹H-NMR of the polyorganosiloxane after the operation is measured, and the weight of the component other than the polyorganosiloxane, such as an organic solvent, is calculated. The amount of the component other than the polyorganosiloxane is subtracted from the weight that has volatilized, and the volatilization amount of the polyorganosiloxane is calculated. The weight loss of the polyorganosiloxane is preferably less than 10 g when the charged amount is 200 g. When the component other than the polyorganosiloxane is contained in an amount of 10 % by weight or more, the internal temperature decreases due to the volatilization of the component other than the polyorganosiloxane, and the polyorganosiloxane is hardly volatilized. Therefore, when the component other than polyorganosiloxane is 10 % by weight or more, it is preferable to carry out the process after performing heating to a temperature of 60°C and reducing the pressure to a pressure of 10 torr to remove the component other than polyorganosiloxane to less than 1 % by weight.

### <Method for Producing Epoxy Group-containing Polyorganosiloxane>

The method for producing the polyorganosiloxane of the present invention is not particularly limited as long as the polyorganosiloxane represented by the above formula (1) can be obtained. Examples thereof include: a method for simultaneously condensing one or more disiloxane compounds or disilazane compounds and hydrolysates thereof, or alkoxysilane compounds and hydrolysates and partially hydrolyzed condensates thereof; a method for condensing a chlorosilane compound, hydrolysates and partially hydrolyzed condensates thereof; a method for ring-opening polymerization of a cyclic siloxane compound; and chain polymerization including anionic polymerization. Any of these production methods may be used, and a plurality of these production methods may be used in combination. In addition, the method of introducing the epoxy group is also not particularly limited, and examples thereof include: a method for simultaneously condensing one or more of epoxy group-containing alkoxysilane compounds, disiloxane compounds, or disilazane compounds and hydrolysates and partially hydrolyzed condensates thereof; and a method for converting groups other than the epoxy groups introduced into the polyorganosiloxane into epoxy groups by using a chemical method. Any of these methods may be used, and these methods may be used in combination.

Examples of the method for converting groups other than the epoxy groups into epoxy groups by using a chemical method include: a method of reacting a polyorganosiloxane having a structure in which a hydrogen atom is directly bound to a silicon atom with a compound containing an alkenyl group containing an epoxy group; a method of reacting a thiol compound containing an epoxy group with a polyorganosiloxane containing an alkenyl group; and a method of oxidizing an alkenyl group of an alkenyl group-containing polyorganosiloxane using an oxidizing agent.

After the reaction, the obtained polyorganosiloxane may be used after being fractionated into a polyorganosiloxane having a desired epoxy equivalent or molecular weight by using column chromatography, GPC, extraction with a solvent, removal of unnecessary components, or the like. Further, the low boiling point component may be removed by a treatment such as pressure reduction or heating.

### <Solvent in Producing Epoxy Group-containing Polyorganosiloxane>

In producing the epoxy group-containing polyorganosiloxane, a solvent may or may not be used. In the case of using a solvent, water and/or an organic solvent can be used. An organic solvent is particularly preferred. Tetrahydrofuran, toluene, hexane, heptane, acetone, ethyl acetate, methanol, ethanol, isopropanol, chloroform, and dichloromethane are more preferred. Tetrahydrofuran, toluene, and methanol are still more preferred from the viewpoints of solubility, ease of removal and low environmental harm. These solvents may be used in combination of two or more kinds thereof, and the kind of the solvent may be different depending on the reaction step. In the case of forming a polyorganosiloxane skeleton by hydrolytic condensation of an alkoxysilane compound or a chlorosilane compound, hydrolysis can be promoted by adding an appropriate amount of water.

### <Temperature and Pressure Conditions in Producing Epoxy Group-containing Polyorganosiloxane>

The reaction temperature in producing the epoxy group-containing polyorganosiloxane is not particularly limited, and is generally from -40°C to 200°C, preferably from -20°C to 150°C, and more preferably from 0°C to 130°C. At a temperature lower than this temperature range, the reaction of forming a desired polyorganosiloxane skeleton or the reaction of introducing an epoxy group may be difficult to proceed. On the other hand, at a temperature higher than this temperature range, unintended polymerization of the epoxy group or a reaction with other substituents may proceed.

In addition, a pressure in carrying out the reaction is not particularly limited, and is generally from 0.6 atm to 1.4 atm, preferably from 0.8 atm to 1.2 atm, and more preferably from 0.9 atm to 1.1 atm. At a pressure lower than this range, when a solvent is used, a boiling point of the solvent may decrease, and an inside of the reaction system may not be able to be raised to an appropriate reaction temperature. On the other hand, at a pressure higher than this range, although there are advantages that the boiling point of the solvent rises and the reaction can be accelerated by raising the temperature of the reaction system, there is a risk of damage to the apparatus or explosion since the reaction is carried out under pressurized conditions.

### [Curable Resin Composition]

The curable resin composition of the present invention contains the epoxy group-containing polyorganosiloxane of the present invention (hereinafter sometimes referred to as "epoxy group-containing polyorganosiloxane (A)") and a curing agent (B) as described above.

### <Curing Agent (B)>

The curing agent (B) used in the curable resin composition of the present invention is a substance contributing to a crosslinking reaction between epoxy groups and/or a chain extension reaction of the epoxy group of the epoxy group-containing polyorganosiloxane (A) of the present invention. In the present invention, generally, even what is called a "curing accelerator" is regarded as a curing agent if it is a substance contributing to the crosslinking reaction between epoxy groups and/or the chain extension reaction of the epoxy group of the epoxy group-containing polyorganosiloxane (A).

A content of the curing agent (B) in the curable resin composition of the present invention is preferably from 0.1 to 1000 parts by weight, more preferably 100 parts by weight or less, still more preferably 80 parts by weight or less, and particularly preferably 60 parts by weight or less, with respect to 100 parts by weight of the epoxy group-containing polyorganosiloxane (A) of the present invention. More preferred amounts of the curing agent (B) are as described below, depending on the type of the curing agent.

In the present invention, the "solid content" as used in the present invention means components excluding the solvent. In addition, the "all epoxy components" refers to the sum of the epoxy group-containing polyorganosiloxane (A) of the present invention and other epoxy compound (C) to be described later.

In the curable resin composition of the present invention, as the curing agent (B), at least one selected from the group consisting of polyfunctional phenols, a polyisocyanate-based compound, an amine-based compound, an acid anhydride-based compound, an imidazole-based compound, an amide-based compound, a cationic polymerization initiator, and organic phosphines is preferably used. Specific examples of each curing agent and the preferred content thereof in the curable resin composition are described below. The curable resin composition of the present invention preferably contains at least a cationic polymerization initiator as the curing agent (B) among the following curing agents from the viewpoint of curability.

Examples of the polyfunctional phenols include: bisphenols such as bisphenol A, bisphenol F, bisphenol S, bisphenol B, bisphenol AD, bisphenol Z, and tetrabromobisphenol A; biphenols such as 4,4'-biphenol and 3,3',5,5'-tetramethyl-4,4'-biphenol; catechol, resorcin, hydroquinone, dihydroxynaphthalenes; and those in which the hydrogen atom bound to the aromatic ring of these compounds is substituted with a non-interfering substituent such as a halogen group, an alkyl group, an aryl group, an ether group, an ester group, and an organic substituent containing a hetero element such as sulfur, phosphorus, and silicon.

Further examples of the polyfunctional phenols include novolaks and resols which are polycondensates of the phenols or monofunctional phenols such as phenol, cresol and alkylphenol with aldehydes.

Only one of the above polyfunctional phenols may be used, or two or more thereof may be mixed and used in any combination in an optional ratio.

Examples of the polyisocyanate-based compound include polyisocyanate compounds such as tolylene diisocyanate, methylcyclohexane diisocyanate, diphenylmethane diisocyanate, dicyclohexylmethane diisocyanate, isophorone diisocyanate, hexamethylene diisocyanate, xylylene diisocyanate, hydrogenated xylylene diisocyanate, dimer acid diisocyanate, trimethyl hexamethylene diisocyanate, and lysine triisocyanate. Further examples include polyisocyanate compounds obtained by reacting these polyisocyanate compounds with compounds containing at least two active hydrogen atoms such as amino groups, hydroxy groups, carboxyl groups or water, or trimers to pentamers of the above polyisocyanate compounds.

Only one of the above polyisocyanate-based compounds may be used, or two or more thereof may be mixed and used in any combination in an optional ratio.

Examples of the amine-based compound include aliphatic primary, secondary and tertiary amines, aromatic primary, secondary and tertiary amines, cyclic amines, guanidines, and urea derivatives. Specific examples thereof include triethylenetetramine, diaminodiphenylmethane, diaminodiphenyl ether, metaxylenediamine, dicyandiamide, 1,8-diazabicyclo(5,4,0)-7-undecene, 1,5-diazabicyclo(4,3,0)-5-nonene, dimethylurea, and guanylurea.

Only one of the above amine-based compounds may be used, or two or more thereof may be mixed and used in any combination in an optional ratio.

Examples of the acid anhydride-based compound include phthalic anhydride, hexahydrophthalic anhydride, trimellitic anhydride, and a condensate of maleic anhydride and an unsaturated compound. Only one of the above acid anhydride-based compounds may be used, or two or more thereof may be mixed and used in any combination in an optional ratio.

Examples of the imidazole-based compound include 1-isobutyl-2-methylimidazole, 2-methylimidazole, 1-benzyl-2-methylimidazole, 2-ethyl-4-methylimidazole, 2-phenylimidazole, and benzimidazole. Although the imidazole-based compound also functions as a curing accelerator to be described later, in the present invention, it is classified as the curing agent (B). Only one of the above imidazole-based compounds may be used, or two or more thereof may be mixed and used in any combination in an optional ratio.

Examples of the amide-based compound include dicyandiamide and derivatives thereof, and polyamide resins. Only one of the above amide-based compounds may be used, or two or more thereof may be mixed and used in any combination in an optional ratio.

The cationic polymerization initiator generates cations by heat or active energy ray irradiation, and examples thereof include aromatic onium salts. Specific examples thereof include a compound containing an anion component such as SbF₆⁻, BF₄⁻, AsF₆⁻, PF₆⁻, CF₃SO₃²⁻, and B(C₆F₅)₄⁻ and an aromatic cation component containing atoms such as iodine, sulfur, nitrogen and phosphorus. Particularly, diaryl iodonium salts and triaryl sulfonium salts are preferred.

Examples of the cationic polymerization initiator include diphenyliodonium hexafluoroarsenate, diphenyliodonium hexafluorophosphate, diphenyliodonium trifluoromethanesulfonate, triphenylsulfonium tetrafluoroborate, tri-p-tolylsulfonium hexafluorophosphate, tri-p-tolylsulfonium trifluoromethanesulfonate, bis(cyclohexylsulfonyl)diazomethane, bis(tert-butylsulfonyl)diazomethane, bis(p-toluenesulfonyl)diazomethane, triphenylsulfonium trifluoromethanesulfonate, diphenyl-4-methylphenylsulfonium trifluoromethanesulfonate, diphenyl-2,4,6-trimethylphenylsulfonium-p-toluenesulfonate, and diphenyl-p-phenylthiophenylsulfonium hexafluorophosphate.

Examples of specific product names include: sulfonium salts such as UVACURE 1590 (manufactured by Cytec Industries Inc.) and CPI-110P (manufactured by San-Apro Ltd.); iodonium salts, diazonium salt-based, such as IRGACURE250 (manufactured by Ciba Specialty Chemicals), WPI-113 and WPI-124 (manufactured by Wako Pure Chemical Company) and Rp-2074 (manufactured by Rhodia Japan); iodonium salt-based such as AMERICURE series (manufactured by American Can Company), ULTRASE T series (manufactured by Adeka Corporation), and WPAG series (manufactured by Wako Pure Chemical Company); sulfonium salt-based such as UVE series (manufactured by General Electric Company), FC series (manufactured by 3M), UV9310C (manufactured by GE Toshiba Silicones Ltd.), and WPI series (manufactured by Wako Pure Chemical Company); CYRACURE series (manufactured by Union Carbide Corporation), UVI series (manufactured by General Electric Company), FC series (manufactured by 3M), CD series (manufactured by Sartomer), Optomer SP series and Optmer CP series (manufactured by Adeka Corporation), San Aid SI series (manufactured by Sanshin Chemical Industry Co., Ltd.), CI series (manufactured by Nippon Soda Co., Ltd.), WPAG series (manufactured by Wako Pure Chemical Company), and CPI series (manufactured by San-Apro Ltd.), and are not limited to these.

Only one of the above cationic polymerization initiators may be used, or two or more thereof may be mixed and used in any combination in an optional ratio.

Examples of the organic phosphines include tributylphosphine, methyldiphenylphosphine, triphenylphosphine, diphenylphosphine, and phenylphosphine.

Only one of these organic phosphines may be used, or two or more thereof may be mixed and used in any combination in an optional ratio.

In the case of using the polyfunctional phenols, the amine-based compound, or the acid anhydride-based compound as the curing agent (B), it is preferably used such that a equivalent ratio of the functional groups (the hydroxy group of the polyfunctional phenols, the amino group of the amine-based compound, or the acid anhydride group of the acid anhydride-based compound) in the curing agent (B) to all epoxy groups in the curable resin composition of the present invention is in the range of from 0.8 to 1.5. In the case of using the polyisocyanate-based compound, it is preferably used such that number of isocyanate groups in the polyisocyanate-based compound is in an equivalent ratio range of from 1:0.01 to 1:1.5 with respect to the number of hydroxy groups in the curable resin composition of the present invention. In the case of using the imidazole-based compound, it is preferably used in the range of from 0.5 to 10 parts by weight with respect to 100 parts by weight of all epoxy components as solid contents in the curable resin composition of the present invention. In the case of using the amide-based compound, it is preferably used in the range of 0.1 % by weight to 20 % by weight with respect to the total amount of all epoxy components as solid contents and the amide-based compound in the curable resin composition of the present invention. In the case of using the cationic polymerization initiator, it is preferably used in the range of from 0.01 to 15 parts by weight with respect to 100 parts by weight of all epoxy components as solid contents in the curable resin composition of the present invention. In the case of using the organic phosphines, it is preferably used in the range of from 0.1 % by weight to 20 % by weight with respect to the total amount of all epoxy components as solid contents and the organic phosphines in the curable resin composition of the present invention.

As the curing agent (B), in addition to those listed above, phosphonium salts such as tetraphenylphosphonium tetraphenylborate, tetraphenylphosphonium ethyltriphenylborate, and tetrabutylphosphonium tetrabutylborate, tetraphenylboron salts such as 2-ethyl-4-methylimidazole tetraphenylborate, and N-methylmorpholine tetraphenylborate, mercaptan-based compounds, organic acid dihydrazides, boron halide amine complexes, and the like can also be used.

These curing agents (B) may be used alone or in combination of two or more thereof.

### [Other Epoxy Compound (C)]

The curable resin composition of the present invention may contain an epoxy compound (C) other than the epoxy group-containing polyorganosiloxane (A) of the present invention (hereinafter, may be referred to as "other epoxy compound (C)").

Examples of the other epoxy compound (C) include a bifunctional epoxy compound (C) containing two or more epoxy groups, and an epoxy compound containing an aromatic ring and an aliphatic epoxy compound exemplified below. In the following examples, "... based epoxy resin" refers to an epoxy resin in which a hydroxy group is substituted with a glycidyl ether group. Namely, for example, "4,4',4"-trihydroxytriphenylmethane based epoxy resin" refers to an epoxy resin in which the hydroxy group of "4,4',4"-trihydroxytriphenylmethane" is substituted with a glycidyl ether group.

Examples of the epoxy compound containing an aromatic ring include: bisphenol diglycidyl ethers such as bisphenol A diglycidyl ether, bisphenol F diglycidyl ether, bisphenol E diglycidyl ether, bisphenol Z diglycidyl ether, bisphenol S diglycidyl ether, bisphenol AD diglycidyl ether, bisphenol acetophenone diglycidyl ether, bisphenol trimethylcyclohexane diglycidyl ether, bisphenol fluorene diglycidyl ether, tetramethyl bisphenol A diglycidyl ether, tetramethyl bisphenol F diglycidyl ether, tetra-t-butyl bisphenol A diglycidyl ether, and tetramethyl bisphenol S diglycidyl ether; biphenol diglycidyl ethers such as biphenol diglycidyl ether, tetramethyl biphenol diglycidyl ether, dimethyl biphenol diglycidyl ether, and tetra-t-butyl biphenol diglycidyl ether; benzenediol diglycidyl ethers such as hydroquinone diglycidyl ether, dihydroanthracene diglycidyl ether, methyl hydroquinone diglycidyl ether, dibutyl hydroquinone diglycidyl ether, resorcin diglycidyl ether, and methyl resorcin diglycidyl ether; aromatic diglycidyl ethers such as dihydroanthrahydroquinone diglycidyl ether, dihydroxydiphenyl ether diglycidyl ether, thiodiphenol diglycidyl ether, and dihydroxy naphthalene diglycidyl ether; trifunctional epoxy resins such as α,α-bis(4-hydroxyphenyl)-4-(4-hydroxy-α,α-dimethylbenzyl)-ethylbenzene-based epoxy resin, 4,4',4"-trihydroxytriphenylmethane-based epoxy resin, 4,4',4"-ethylidine tris(2-methylphenol)-based epoxy resin, 4,4'-(2-hydroxybenzylidene)bis(2,3,6-trimethylphenol)-based epoxy resin, 2,3,4-trihydroxydiphenylmethane-based epoxy resin, 2,4,6-tris(4-hydroxyphenyl)-1,3,5-triazine-based epoxy resin, 1,3,5-tris(4-hydroxyphenyl)benzene-based epoxy resin, 1,1,1-tris(4-hydroxyphenyl)ethane-based epoxy resin, 4,4'-[1-[4-[1-(4-hydroxy-3,5-dimethylphenyl)-1-methylethyl]phenyl]ethylidene]bis(2-methylphenol)-based epoxy resin, and 2,6-bis(4-hydroxy-3,5-dimethylbenzyl)-4-methylphenol-based epoxy resin; tetrafunctional epoxy resins such as a 2,2'-methylenebis[6-(2-hydroxy-5-methylbenzyl)-p-cresol-based epoxy resin, a 4-[bis(4-hydroxy-3-methylphenyl)methyl]benzene-1,2-diol-based epoxy resin, a 1,1,2,2-tetrakis(p-hydroxyphenyl)ethane-based epoxy resin, and an a,a,a',a',-tetrakis(4-hydroxyphenyl)-p-xylene-based epoxy resin; pentafunctional epoxy resins such as a 2,4,6-tris[(4-hydroxyphenyl)methyl]-1,3-benzenediol-based epoxy resin; epoxy compounds produced from various amine compounds, such as diaminodiphenylmethane, aminophenol, and xylenediamine, and epihalohydrin; and multifunctional epoxy resins such as a phenol novolac-based epoxy resin, a cresol novolac-based epoxy resin, a bisphenol A novolac-based epoxy resin, a naphthol novolac-based epoxy resin, a phenol aralkyl-based epoxy resin, a biphenyl aralkyl-based epoxy resin and a phenol-modified xylene-based epoxy resin, or polyvalent epoxy resins such as epoxy resins obtained by using various phenol-based compounds such as polyvalent phenol resins obtained by condensation reaction of such various phenols with various aldehydes such as hydroxybenzaldehyde, crotonaldehyde and glyoxal or cocondensation resins of heavy oil or pitch, phenols and formaldehydes.

Examples of the aliphatic epoxy compound include: epoxy compounds obtained by adding hydrogen to an aromatic ring of diglycidyl ether selected from the bisphenol diglycidyl ethers, the biphenol diglycidyl ethers, the benzenediol diglycidyl ethers and the aromatic diglycidyl ethers; (poly)alkylene glycol diglycidyl ethers consisting only of a chain structure such as ethylene glycol diglycidyl ether, polyethylene glycol diglycidyl ether, propylene glycol diglycidyl ether, polypropylene glycol diglycidyl ether, 1,4-butanediol diglycidyl ether, polytetramethylene glycol diglycidyl ether, 1,5-pentanediol diglycidyl ether, polypentamethylene glycol diglycidyl ether, 1,6-hexanediol diglycidyl ether, polyhexamethylene glycol diglycidyl ether, 1,7-heptanediol diglycidyl ether, polyheptamethylene glycol diglycidyl ether, 1,8-octanediol diglycidyl ether, 1,10-decanediol diglycidyl ether, and 2,2-dimethyl-1,3-propanediol diglycidyl ether; alkylene glycol diglycidyl ethers having a cyclic structure such as 1,4-cyclohexanedimethanol diglycidyl ether; and epoxy compounds such as an alicyclic epoxy resin and a heterocyclic epoxy resin.

Among these, the other epoxy compound (C) is preferably an aliphatic epoxy compound, and particularly preferably hydrogenated bisphenol-based diglycidyl ethers, from the viewpoints of the curability, surface nature of coating film, adhesiveness, and impact resistance.

Only one of the above other epoxy compounds (C) may be used, or two or more thereof may be used in combination.

When the curable resin composition of the present invention contains the epoxy group-containing polyorganosiloxane (A) of the present invention and the other epoxy compound (C), a percentage of the epoxy group-containing polyorganosiloxane (A) in all epoxy component as solid contents in the curable resin composition of the present invention is preferably 0.1 % by weight or more, more preferably 1 % by weight or more, and still more preferably 2 % by weight or more, and on the other hand, is preferably 80 % by weight or less, more preferably 50 % by weight or less, and still more preferably 40 % by weight or less. When the percentage of the epoxy group-containing polyorganosiloxane (A) is larger than or equal to the lower limit value described above, an effect of improving the curability by using the epoxy group-containing polyorganosiloxane (A) can be sufficiently obtained. On the other hand, when the percentage of the epoxy group-containing polyorganosiloxane (A) is smaller than or equal to the upper limit value described above, the effect of improving the physical properties by adding the other epoxy compound (C) can be sufficiently obtained.

### <Other Components>

The curable resin composition of the present invention may contain other components in addition to the components described above. Examples of the other components include a curing accelerator (however, those corresponding to the curing agent are excluded), a coupling agent, a flame retardant, an antioxidant, a light stabilizer, a plasticizer, a reactive diluent, a pigment, an inorganic filler, and an organic filler. The other components described above can be used in appropriate combination depending on the desired physical properties of the curable resin composition.

### [Cured Product]

The cured product can be obtained by curing the curable resin composition of the present invention. Here, "curing" means that the epoxy resin is intentionally cured by heat and/or light, and the degree of curing may be controlled by the desired physical properties and applications.

### [Application]

The epoxy group-containing polyorganosiloxane of the present invention is excellent in curability and provides a cured product excellent in surface nature, adhesiveness and impact resistance. Therefore, the epoxy group-containing polyorganosiloxane and the curable resin composition of the present invention blended with the epoxy group-containing polyorganosiloxane can be used suitably in the fields of paint, electrical/electronic material, adhesive, FRP (fiber reinforced plastic), *etc.*

### Examples

Hereinafter, although the present invention is described more concretely based on Examples, the present invention is not limited at all by the following Examples. The values of various production conditions and evaluation results in the following Examples have meanings as preferred values of the upper limit or the lower limit in the embodiment of the present invention. A preferred range may be a range defined by a combination of the above upper limit or lower limit and the values of following Examples or a combination of values of Examples.

### [Raw Materials]

Raw materials, catalysts, solvents and the like used in the following Examples and Comparative Examples are as follows.

### [Raw Materials, Catalysts and Solvents Used for Synthesis of Epoxy Group-containing Polyorganosiloxane]

Hexamethyldisiloxane (manufactured by NuSil Technology, product name: S-7205)
1,1,3,3-tetramethyldisiloxane (manufactured by NuSil Technology)
Methyl silicate MS51 (manufactured by Mitsubishi Chemical Corporation)
1,2-epoxy-4-vinylcyclohexane (manufactured by Tokyo Chemical Industry Co., Ltd.)
Allyl glycidyl ether (manufactured by Tokyo Chemical Industry Co., Ltd.)
Tetrahydrofuran (manufactured by Kishida Chemical Co., Ltd.)
Toluene (manufactured by Kishida Chemical Co., Ltd.)
Methanol (manufactured by Kishida Chemical Co., Ltd.)
Heptane (manufactured by Kishida Chemical Co., Ltd.)
IN hydrochloric acid (manufactured by Kishida Chemical Co., Ltd.)
Platinum(0)-1,3-divinyl-1,1,3,3-tetramethyldisiloxane complex xylene solution (manufactured by Aldrich, having a platinum concentration of 2 % by weight)
Activated carbon (manufactured by Osaka Gas Chemicals Co., Ltd., purified Shirasagi)
Silica gel (Silica gel 60N manufactured by Kanto Chemical Co., Ltd. (spherical, neutral) 63 µm to 210 µm)

### [Curing Agent for Used in Curable Resin Composition]

WPI-116 (manufactured by Wako Pure Chemical Company)

### [Other Epoxy Compound Used in Curable Resin Composition]

YX8000 (manufactured by Mitsubishi Chemical Corporation, hydrogenated bisphenol A-based epoxy resin)
jER828US (manufactured by Mitsubishi Chemical Corporation, bisphenol A-based epoxy resin)
C2021P (manufactured by Daicel Corporation, alicyclic epoxy resin)
x-40-2670 (manufactured by Shin-Etsu Chemical Co., Ltd., alicyclic epoxy group-containing silicone oligomer)

### [Evaluation Method]

Evaluation methods in the following Synthesis Examples, Examples and Comparative Examples are as follows.

### [Epoxy Equivalent]

An epoxy equivalent of the epoxy group-containing polyorganosiloxane obtained in Synthesis Examples was measured based on JIS K 7236.

### [Number Average Molecular Weight (Mn) and Weight Average Molecular Weight (Mw) of Epoxy Group-containing Polyorganosiloxane]

A weight average molecular weight and a number average molecular weight of the epoxy group-containing polyorganosiloxane obtained in Synthesis Examples were measured by gel permeation chromatography (GPC). The device and measurement conditions used for GPC measurement are as follows.
Device: GPC
Machine type: HLC-8220GPC (manufactured by Tosoh Corporation)
Column: KF-G, KF-401HQ, KF-402HQ, and KF-402.5HQ (manufactured by Showa Denko K. K.)
Detector: UV-8020 (manufactured by Tosoh Corporation), 254 nm
Eluent: THF (0.3 mL/min, 40°C)
Sample: 1% tetrahydrofuran solution (10 µl injection)
Calibration curve: Standard polystyrene (manufactured by Tosoh Corporation)

### [Infrared Spectral Absorption Analysis of Epoxy Group-containing Polyorganosiloxane]

The epoxy group-containing polyorganosiloxane obtained in Synthesis Examples was measured by the ATR method (attenuated total reflection method) using the following device and measurement conditions.
Device: Nicolet iN10 + iZ10 (manufactured by Thermo Fisher Scientific) and Gladi ATR (manufactured by PIKE TECHNOLOGIES)
Resolution: 4 cm⁻¹
Number of accumulation: 64 times

### [Measurement Method of ²⁹Si-NMR]

The measurement was performed using the following device, measurement conditions, and sample preparation method.
Device: JNM-ECS400 manufactured by JEOL Ltd., TUNABLE (10), Si free, AT10 probe
Measurement conditions: relaxation delay: 15 seconds, SCAN frequency: 1024 times, measurement mode: non-gated decoupling pulse method (NNE), no spin, measurement temperature: 25°C
Preparation of sample: tris(2,4-pentadionato) chromium (III) was added to deuterated chloroform at a concentration of 0.5 % by weight to obtain a solvent for ²⁹Si-NMR measurement.
1.5 g of the epoxy group-containing polyorganosiloxane to be measured was weighed, 2.5 ml of the above solvent for ²⁹Si-NMR measurement was added and the epoxy group-containing polyorganosiloxane was dissolved, and the obtained mixture was charged into a Teflon (registered trademark) NMR sample tube having a diameter of 10 mm.

### [Measurement of Weight Loss Rate during Heating under Reduced Pressure]

First, the ¹H-NMR was measured, and a weights of the components other than the epoxy group-containing polyorganosiloxane, such as an organic solvent, were calculated.

A rotor was placed in an eggplant-shaped flask and the weight thereof was measured. Then, the epoxy group-containing polyorganosiloxane was charged into the eggplant-shaped flask, and the weight of the epoxy group-containing polyorganosiloxane was measured.

The eggplant-shaped flask was heated in an oil bath and the rotor was rotated by a magnetic stirrer. The liquid was stirred until the liquid surface flowed and a temperature was raised until the internal temperature reached 110°C, followed by reducing a pressure by an oil-type vacuum pump. The oil-type vacuum pump used had an ability to achieve a degree of pressure reduction of 0.15 torr. After 2 hours, the eggplant-shaped flask was cooled to room temperature, and returned to normal pressure. The oil adhered to the eggplant-shaped flask was thoroughly wiped off and the weight of the eggplant-shaped flask in a state where the epoxy group-containing polyorganosiloxane was therein was measured. The weight of the eggplant-shaped flask and the rotor previously measured was subtracted, and the weight volatilized by the operation was calculated. The ¹H-NMR of the epoxy group-containing polyorganosiloxane after the operation was measured, and the weight of the components other than the epoxy group-containing polyorganosiloxane, such as an organic solvent, were calculated.

The amount of the components other than the epoxy group-containing polyorganosiloxane was subtracted from the weight that has volatilized, and the weight loss rate of the epoxy group-containing polyorganosiloxane was calculated.

### [UV Curability]

The curable resin compositions of Examples and Comparative Examples were applied on the following steel plate described in JIS K5600-1-4 using a 75 µm film applicator, and irradiated with UV under the following conditions to prepare a cured coating film.
- Steel plate: SPCC-SB PB-N144 treated 0.3 × 50 × 200 mm
- UV irradiation conditions
   Lamp: high pressure mercury lamp
   Energy: 100 mJ/cm², 956 mW/cm²
   Belt conveyor speed: 14.4 m/min
   Distance: 15 cm

The UV irradiation conditions were set to one time, and the number of UV irradiations until tackiness of the coating film was eliminated was evaluated as the UV curability.

### [Adhesion]

A cross-cut peeling test was performed on the cured film formed for evaluation of the UV curability according to JIS K5600-5-6. Evaluation was made based on the number of squares remaining on the substrate among 100 squares.

### [Weight Drop Resistance]

The cured film formed for the evaluation of the UV curability was subjected to a weight drop test according to the method of JIS K5600-5-3, and the state of the coating film was visually checked, and evaluated according to the following criteria.
A: There is no cracking and no peeling.
B: There is peeling and no cracking.
D: There is cracking.

### [Surface Nature]

With respect to the cured film formed for evaluation of the above UV curability, the surface of the cured coating film was visually checked and evaluated according to the following criteria.
A: There are no wrinkles and no shrinkage.
D: There are wrinkles and shrinkage.

### [Synthesis and Evaluation of Epoxy Group-containing Polyorganosiloxane]

### <Synthesis Example 1: Synthesis of Epoxy Group-containing Polyorganosiloxane 1>

As raw materials of the epoxy group-containing polyorganosiloxane, 625 parts by weight of 1,1,3,3-tetramethyldisiloxane, 504 parts by weight of hexamethyldisiloxane, and 422 parts by weight of methyl silicate MS51 were used, as a solvent, 987 parts by weight of tetrahydrofuran was used, and as a catalyst and water, a mixture of 115 parts by weight of 1 N hydrochloric acid and 115 parts by weight of methanol was used. Hydrolysis and condensation were performed at 30°C. After adding 938 parts by weight of heptane thereto, hydrochloric acid was removed by washing with desalinated water. Then, the solvent was distilled off by using a rotary evaporator at 76°C under a reduced pressure of 15 torr until no more solvent was distilled off visually. Subsequently, the obtained product was heated at 120°C under a reduced pressure of 0.15 torr for 2 hours to obtain 768 parts by weight of an epoxy group-containing polyorganosiloxane 1'.

In 257 parts by weight of toluene, 200 parts by weight of the obtained epoxy group-containing polyorganosiloxane 1' was dissolved, and then 0.5 part by weight of a platinum(0)-1,3-divinyl-1,1,3,3-tetramethyldisiloxane complex xylene solution having a platinum concentration of 2 % by weight was added and stirred. After heating to 80°C, 234 parts by weight of 1,2-epoxy-4-vinylcyclohexane was added dropwise over 4 hours, and the mixture was further heated at 80°C for 5 hours. After performing cooling to around room temperature, 69 parts by weight of activated carbon was added, and the mixture was stirred for 2 hours and then filtered twice. The solvent was distilled off by using a rotary evaporator at 60°C under a reduced pressure of 15 torr until no more solvent was distilled off visually. Subsequently, the obtained product was heated at 85°C under a reduced pressure of 0.15 torr for 5 hours to obtain 305 parts by weight of an epoxy group-containing polyorganosiloxane 1.

The obtained epoxy group-containing polyorganosiloxane 1 had an epoxy equivalent of 308 g/equivalent, a number average molecular weight of 1300, and a weight average molecular weight of 2300, and contained the M unit, the D unit, the T unit, and the Q unit in amounts of 67 mol%, 2 mol%, 0 mol%, and 31 mol% respectively, with respect to total silicon. In the infrared spectral absorption analysis, the maximum absorption wave number of the Si-O stretching vibration was 1045 cm⁻¹, and no absorption peak of the Si-O stretching vibration was observed in the region having a wave number of from 1070 cm⁻¹ to 1150 cm⁻¹. The weight loss rate during heating under a reduced pressure was 1.2 % by weight.

### <Synthesis Example 2: Synthesis of Epoxy Group-containing Polyorganosiloxane 2>

As raw materials of the epoxy group-containing polyorganosiloxane, 833 parts by weight of 1,1,3,3-tetramethyldisiloxane, 252 parts by weight of hexamethyldisiloxane, and 422 parts by weight of methyl silicate MS51 were used, as a solvent, 965 parts by weight of tetrahydrofuran was used, and as a catalyst and water, a mixture of 115 parts by weight of 1 N hydrochloric acid and 115 parts by weight of methanol was used. Hydrolysis and condensation were performed at 30°C. After adding 938 parts by weight of heptane thereto, and hydrochloric acid was removed by washing with desalinated water. Then, the solvent was distilled off by using a rotary evaporator at 76°C under a reduced pressure of 15 torr until no more solvent was distilled off visually. Subsequently, the obtained product was heated at 120°C under a reduced pressure of 0.15 torr for 2 hours to obtain 744 parts by weight of an epoxy group-containing polyorganosiloxane 2'.

In 345 parts by weight of toluene, 200 parts by weight of the obtained epoxy group-containing polyorganosiloxane 2' was dissolved, and then 0.6 part by weight of a platinum(0)-1,3-divinyl-1,1,3,3-tetramethyldisiloxane complex xylene solution having a platinum concentration of 2 % by weight was added and stirred. After heating to 80°C, 234 parts by weight of 1,2-epoxy-4-vinylcyclohexane was added dropwise over 5 hours, and the mixture was further heated at 80°C for 13 hours. After performing cooling to around room temperature, 79 parts by weight of activated carbon was added, and the mixture was stirred for 2 hours and then filtered. The solvent was distilled off by using a rotary evaporator at 60°C under a reduced pressure of 15 torr until no more solvent was distilled off visually. Subsequently, the obtained product was heated at 80°C under a reduced pressure of 0.15 torr for 5 hours to obtain 373 parts by weight of an epoxy group-containing polyorganosiloxane 2.

The obtained epoxy group-containing polyorganosiloxane 2 had an epoxy equivalent of 276 g/equivalent, a number average molecular weight of 1500, and a weight average molecular weight of 3400, and contained the M unit, the D unit, the T unit, and the Q unit in amounts of 68 mol%, 2 mol%, 0 mol%, and 30 mol% respectively, with respect to total silicon. In the infrared spectral absorption analysis, the maximum absorption wave number of the Si-O stretching vibration was 1043 cm⁻¹, and no absorption peak of the Si-O stretching vibration was observed in the region having a wave number of from 1070 cm⁻¹ to 1150 cm⁻¹.

### <Synthesis Example 3: Synthesis of Epoxy Group-containing Polyorganosiloxane 3>

As raw materials of the epoxy group-containing polyorganosiloxane, 1042 parts by weight of 1,1,3,3-tetramethyldisiloxane and 422 parts by weight of methyl silicate MS51 were used, as a solvent, 943 parts by weight of tetrahydrofuran was used, and as a catalyst and water, a mixture of 115 parts by weight of 1 N hydrochloric acid and 115 parts by weight of methanol was used. Hydrolysis and condensation were performed at 30°C. After adding 938 parts by weight of heptane thereto, and hydrochloric acid was removed by washing withdesalinated water. Then, the solvent was distilled off by using a rotary evaporator at 76°C under a reduced pressure of 15 torr until no more solvent was distilled off visually. Subsequently, the obtained product was heated at 120°C under a reduced pressure of 0.15 torr for 2 hours to obtain 573 parts by weight of an epoxy group-containing polyorganosiloxane 3'.

In 331 parts by weight of toluene, 150 parts by weight of the obtained epoxy group-containing polyorganosiloxane 3' was dissolved, and then 0.2 part by weight of a platinum(0)-1,3-divinyl-1,1,3,3-tetramethyldisiloxane complex xylene solution having a platinum concentration of 2 % by weight was added and stirred. After heating to 80°C, 208 parts by weight of allyl glycidyl ether was added dropwise over 1 hour, the temperature was raised to 120°C and the mixture was further heated for 1 hour. After performing cooling to around room temperature, 150 parts by weight of silica gel was added, and the mixture was stirred for 30 minutes and then filtered. The solvent was distilled off by using a rotary evaporator at 60°C under a reduced pressure of 15 torr until no more solvent was distilled off visually. Subsequently, the obtained product was heated at 80°C under a reduced pressure of 0.15 torr for 2 hours to obtain 287 parts by weight of an epoxy group-containing polyorganosiloxane 3.

The obtained epoxy group-containing polyorganosiloxane 3 had an epoxy equivalent of 221 g/equivalent, a number average molecular weight of 1500, and a weight average molecular weight of 1600, and contained the M unit, the D unit, the T unit, and the Q unit in amounts of 65 mol%, 4 mol%, 0 mol%, and 32 mol% respectively, with respect to total silicon. In the infrared spectral absorption analysis, the maximum absorption wave number of the Si-O stretching vibration was 1045 cm⁻¹, and no absorption peak of the Si-O stretching vibration was observed in the region having a wave number of from 1070 cm⁻¹ to 1150 cm⁻¹. The weight loss rate during heating under a reduced pressure was 1.2 % by weight.

In Table 1, the evaluation results of the epoxy group-containing polyorganosiloxanes 1 to 3 are summarized.

**[Table 1]**

| | | Epoxy group-containing polyorganosiloxane | | |
|---|---|---|---|---|
| | | 1 | 2 | 3 |
| Epoxy equivalent (g/eq) | | 308 | 276 | 221 |
| Number average molecular weight | | 1300 | 1500 | 1500 |
| Weight average molecular weight | | 2300 | 3400 | 1600 |
| Percentage (mol%) with respect to total silicon | M unit | 67 | 68 | 65 |
| | D unit | 2 | 2 | 4 |
| | T unit | 0 | 0 | 0 |
| | Q unit | 31 | 30 | 32 |
| Maximum absorption wave number (cm⁻¹) of Si-O stretching vibration | | 1045 | 1043 | 1045 |
| Weight loss rate (% by weight) during heating under reduced pressure | | 1.2 | - | 1.2 |

### [Examples 1 to 12 and Comparative Examples 1 to 3]

Respective components were blended as shown in Table 2 to produce a curable resin composition, and cured coating films were prepared as described above. The UV curability, adhesion, weight drop resistance, and surface nature at the time were evaluated by the above methods. The results are shown in Table 2.

**[Table 2]**

| | | | Example 1 | Example 2 | Example 3 | Example 4 | Example 5 | Example 6 | Example 7 | Example 8 |
|---|---|---|---|---|---|---|---|---|---|---|
| Blending | Epoxy group-containing polyorganosiloxane (parts by weight) | Epoxy group-containing polyorganosiloxane 1 | 100 | | | 10 | 20 | 40 | 60 | |
| | | Epoxy group-containing polyorganosiloxane 2 | | 100 | | | | | | 10 |
| | | Epoxy group-containing polyorganosiloxane 3 | | | 100 | | | | | |
| | Other epoxy compounds (parts by weight) | YX8000 | | | | 90 | 80 | 60 | 40 | 90 |
| | | C2021P | | | | | | | | |
| | | jER828US | | | | | | | | |
| | | x-40-2670 | | | | | | | | |
| | Curing agent (parts by weight) | WPI-116 | 2 | 2 | 2 | 2 | 2 | 2 | 2 | 2 |
| Evaluation result | UV curability | times | 1 | 1 | 2 | 2 | 1 | 1 | 1 | 1 |
| | Adhesion | | 50/100 | 60/100 | 90/100 | 100/100 | 95/100 | 90/100 | 70/100 | 100/100 |
| | Weight drop resistance | | B | B | A | A | A | A | A | A |
| | Surface nature | | A | A | A | A | A | A | A | A |

| | | | Example 9 | Example 10 | Example 11 | Example 12 | Comparative Example 1 | Comparative Example 2 | Comparative Example 3 | |
|---|---|---|---|---|---|---|---|---|---|---|
| Blending | Epoxy group-containing polyorganosiloxane (parts by weight) | Epoxy group-containing polyorganosiloxane 1 | | | | | | | | |
| | | Epoxy group-containing polyorganosiloxane 2 | 20 | 40 | 60 | 40 | | | | |
| | | Epoxy group-containing polyorganosiloxane 3 | | | | | | | | |
| | Other epoxy compounds (parts by weight) | YX8000 | 80 | 60 | 40 | | 100 | | | |
| | | C2021P | | | | | | 100 | | |
| | | jER828US | | | | 60 | | | | |
| | | x-40-2670 | | | | | | | 100 | |
| | Curing agent (parts by weight) | WPI-116 | 2 | 2 | 2 | 2 | 2 | 2 | 2 | |
| Evaluation result | UV curability | times | 1 | 1 | 1 | 1 | 7 | 5 | 3 | |
| | Adhesion | | 95/100 | 90/100 | 70/100 | 70/100 | 100/100 | 0/100 | 0/100 | |
| | Weight drop resistance | | A | A | A | A | A | D | D | |
| | Surface nature | | A | A | A | A | A | D | D | |

### [Study]

As can be seen from Table 2, the curable resin compositions of Examples 1 to 12 containing the epoxy group-containing polyorganosiloxane of the present invention are good in UV curability, adhesion, weight drop resistance, and surface nature.

On the other hand, the curable resin composition of Comparative Example 1 has insufficient UV curability. The curable resin compositions of Comparative Examples 2 and 3 are insufficient in all of the curability, adhesion, weight drop resistance, and surface nature.

Although the present invention has been described in detail and by reference to specific embodiments, it is apparent to those skilled in the art that it is possible to add various alterations and modifications without departing from the spirit and the scope of the present invention. The present application is based on Japanese Patent Application (No. 2018-031539) filed on February 26, 2018, and the entire contents of which are incorporated herein by reference. In addition, all references referred herein are entirely incorporated.

### Industrial Applicability

The epoxy group-containing polyorganosiloxane of the present invention is excellent in curability and provides a cured product excellent in surface nature, adhesiveness and impact resistance. Therefore, the epoxy group-containing polyorganosiloxane, the curable resin composition containing the epoxy group-containing polyorganosiloxane and the cured product thereof according to the present invention can be used suitably in the fields of paint, ink for 2D/3D printer, electrical/electronic material, adhesive, fiber reinforced plastic (FRP), dental material, *etc.*

## Claims

1. An epoxy group-containing polyorganosiloxane, comprising: an M unit (R¹R²R³SiO_{1/2}), a D unit (R⁴R⁵O_{2/2}), and a Q unit (SiO_{4/2}), wherein a content of a T unit (R⁶SiO_{3/2}) with respect to total silicon is 80 mol% or less.

2. The epoxy group-containing polyorganosiloxane according to claim 1, which has a weight loss rate of 5 % by weight or less when the polyorganosiloxane is heated at 110°C for 2 hours under a reduced pressure of 0.15 torr.

3. The epoxy group-containing polyorganosiloxane according to claim 1 or 2, wherein a content of the M unit (R¹R²R³SiO_{1/2}) with respect to total silicon is 10 mol% or more and 75 mol% or less.

4. The epoxy group-containing polyorganosiloxane according to any one of claims 1 to 3, wherein a content of the Q unit (SiO_{4/2}) with respect to total silicon is 3 mol% or more.

5. The epoxy group-containing polyorganosiloxane according to any one of claims 1 to 4, which has a maximum absorption wave number of Si-O stretching vibration in a region having a wave number of from 1030 cm⁻¹ to 1060 cm⁻¹ in infrared absorption spectrum analysis.

6. The epoxy group-containing polyorganosiloxane according to any one of claims 1 to 5, wherein a content of the D unit (R⁴R⁵O_{2/2}) with respect to total silicon is 10 mol% or less.

7. The epoxy group-containing polyorganosiloxane according to any one of claims 1 to 6, which has an epoxy equivalent of from 100 g/equivalent to 5000 g/equivalent.

8. A curable resin composition comprising the epoxy group-containing polyorganosiloxane (A) according to any one of claims 1 to 7 and a curing agent (B).

9. The curable resin composition according to claim 8, wherein the curing agent (B) is a cationic polymerization initiator.

10. The curable resin composition according to claim 8 or 9, further comprising an epoxy compound (C) which is different from the epoxy group-containing polyorganosiloxane (A).

11. The curable resin composition according to claim 10, wherein an aliphatic epoxy compound is contained as the epoxy compound (C).

12. The curable resin composition according to claim 11, wherein hydrogenated bisphenol-based diglycidyl ethers are contained as the epoxy compound (C).

13. The curable resin composition according to any one of claims 10 to 12, wherein a percentage of the epoxy group-containing polyorganosiloxane (A) occupying a total amount of the epoxy group-containing polyorganosiloxane (A) and the epoxy compound (C) is 0.1 % by weight or more and 80 % by weight or less.

14. A cured product obtained by curing the curable resin composition according to any one of claims 8 to 13.
